# EUROPÄISCHE PATENTSCHRIFT

(11) **EP 0 713 023 B1**
(45) Veröffentlichungstag und Bekanntmachung des Hinweises auf die Patenterteilung: **25.11.1998**
(21) Anmeldenummer: 95114424.5
(22) Anmeldetag: 14.09.1995
(51) Int. Cl.: F16D 1/108, B41F 13/008

(54) **Wellenkupplung**
Shaft coupling
Accouplement d'arbres

(30) Priorität: 17.11.1994 DE 4441019
(43) Veröffentlichungstag der Anmeldung: 22.05.1996
(73) Patentinhaber: Windmöller & Hölscher, D-49525 Lengerich (DE)
(72) Erfinder: Lübke, Herbert, D-49536 Lienen (DE)

(56) Entgegenhaltungen:
- EP-A- 0 334 704
- EP-A- 0 392 323
- GB-A- 1 194 047
- US-A- 3 362 050
- US-A- 4 057 114

## Beschreibung

Die Erfindung betrifft eine Wellenkupplung zum Ankuppeln eines Wellenzapfens einer Druckmaschine an einer Antriebswelle mit formschlüssig ineinandergreifenden Kupplungsteilen, die mit den miteinander zu kuppelnden Wellen verbunden sind, wobei über den Umfang eines Zapfens an dem einen Wellenende ein Bolzen herausragt, der in einem in einer Hülse, die am anderen Wellenende vorgesehen ist, angeordneten Zentrierausschnitt einschiebbar und dort durch eine in einem über die Hülse schiebbaren Schiebering vorgesehenen Anlagefläche festlegbar ist, wobei der Bolzen an zwei Seiten über den Zapfen hinausragt.

Wellenkupplungen sind beispielsweise aus der EP 0 392 323 Al bekannt. Diese Kupplungen finden beispielsweise bei Mehrfachdruckmaschinen Anwendung. In Mehrfarbendruckmaschinen werden die Druckwalzen der einzelnen Druckwerke von Antriebswellen angetrieben, wobei zwischen jeder Antriebswelle und jedem Wellenzapfen einer Druckwalze eine Wellenkupplung angeordnet ist. Die Druckwalzen sind jeweils in einem entsprechenden Seitengestell gelagert. Der Aufbau der bekannten Wellenkupplung bedingt es nun, daß beim Auswechseln der Druckzylinder diese in axialer Richtung aus dem Seitengestell herausgezogen werden müssen. Dies führt zu einer aufwendigen Konstruktion, da die Druckwalze durch das Seitengestell herausgezogen werden muß, Auch die Handhabung beim Auswechseln der Druckwalze ist hier umständlich und aufwendig.

Auch die aus der EP-A-334704, die die Merkmale des Oberbegriffs des Anspruchs 1 beschreibt, bekannte Kupplung muß zum Ein- bzw. Auskuppeln in axialer Richtung auseinandergezogen werden. Aus diesem Grund kann auch sie nicht zum Ankuppeln eines Wellenzapfens einer Druckwalze an eine Antriebwelle bei Mehrfarben-Druckmaschinen eingesetzt werden. Ein weiterer Nachteil der aus der EP-A-334704 bekannten Kupplung besteht darin, daß sie aufgrund ihrer Konstruktion keinesfalls spielfrei arbeitet. Spielfreie Kupplungen sind aber für den Antrieb von Druckwalzen in Mehrfarben-Druckmaschinen unabdingbar, um überhaupt passergerecht drucken zu können.

Aufgabe der vorliegenden Erfindung ist es, eine spielfreie Wellenkupplung an die Hand zu geben, die ein einfacheres Auswechseln der Druckwalzen ermöglicht.

Erfindungsgemäß wird diese Aufgabe nun dadurch gelöst, daß bei der gattungsgemäßen Wellenkupplung der Zentrierausschnitt senkrecht zur Wellenachse verläuft und daß der Bolzen an seinen beiden Enden jeweils umfangsseitig schräge Flächen aufweist und der Bolzen geringfügig gegenüber den ihn tragenden Zapfen verdrehbar ist. Diese Bauweise ermöglicht es, die Druckwalze von der Seite her in das Seitengestell einzuführen. Hier sind also im Seitengestell nur entsprechende Schlitze vorzusehen, zu denen dann auch der Zentrierausschnitt der Hülse ausgerichtet werden muß, um die Druckwalze einlegen und ankuppeln zu können. Durch das Überschieben des Schieberinges ist gewährleistet, daß sich der Bolzen mit seinen Schrägflächen genau an die entsprechend angeschrägte Anlagefläche im Schiebering anlegt.

Bevorzugte Ausgestaltungen der Erfindungen ergeben sich aus den sich an den Hauptanspruch anschließenden beiden Unteransprüchen.

Demnach kann in der Hülse ein fehlerbelasteter Kolben angeordnet sein, mit dem der Schiebering verbunden ist. Über eine entsprechende Druckfeder, die auf den Kolben wirkt, wird auch der Schiebering, der starr mit dem Kolben verbunden ist, beaufschlagt. Dabei wird er druch die Federkraft über der Hülse in der geschlossenen Position gehalten. Der Kolben kann über eine entsprechend Zugstange, die Teil einer Kolben-Zylinder-Einheit sein kann, gegen die Federkraft zurückgezogen werden, so daß gleichzeitig der Schiebering aus der geschlossenen Position der Kupplung in eine geöffnete Position zurückgezogen werden kann.

Weitere Einzelheiten und Vorteile der Erfindung werden anhand eines in der Zeichnung dargestellten Ausführungsbeispiels näher erläutert. Es zeigen:
- Fig. 1:: eine Seitenansicht einer eingebauten Kupplung gemäß einer Ausführungsform der vorliegenden Erfindung in Anwendung bei einer Druckmaschine,
- Fig. 2:: verschiedene Ansichten von Teilen der Kupplung, teilweise geschnitten,
- Fig. 3:: eine perspektivische Ansicht eines Teils der Kupplung gemäß der Ausführungsform nach Fig. 1 und 2.

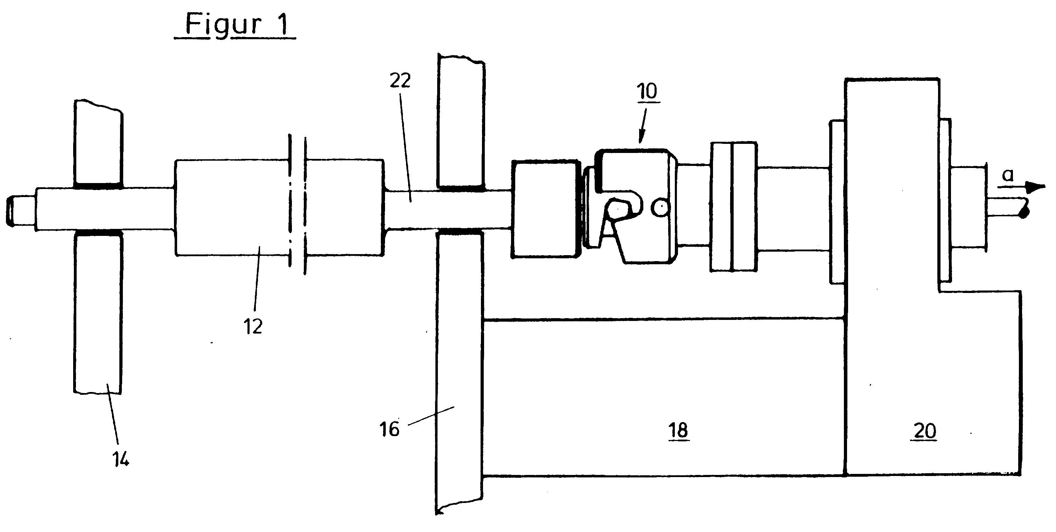

Aus der Fig. 1 ergibt sich die Einbausituation einer erfindungsgemäßen Wellenkupplung 10 innerhalb einer Druckmaschine. Hier ist ein Formzylinder 12 einer Mehrfarben-Druckmaschine in Seitengestellen 14, 16 gelagert. Das Seitengestell 16 ist über eine Traverse 18 mit einem Getriebe 20 verbunden. Die Kupplung 10 ist zwischen dem Seitengestell 16 und dem Getriebe 20 angeordnet.

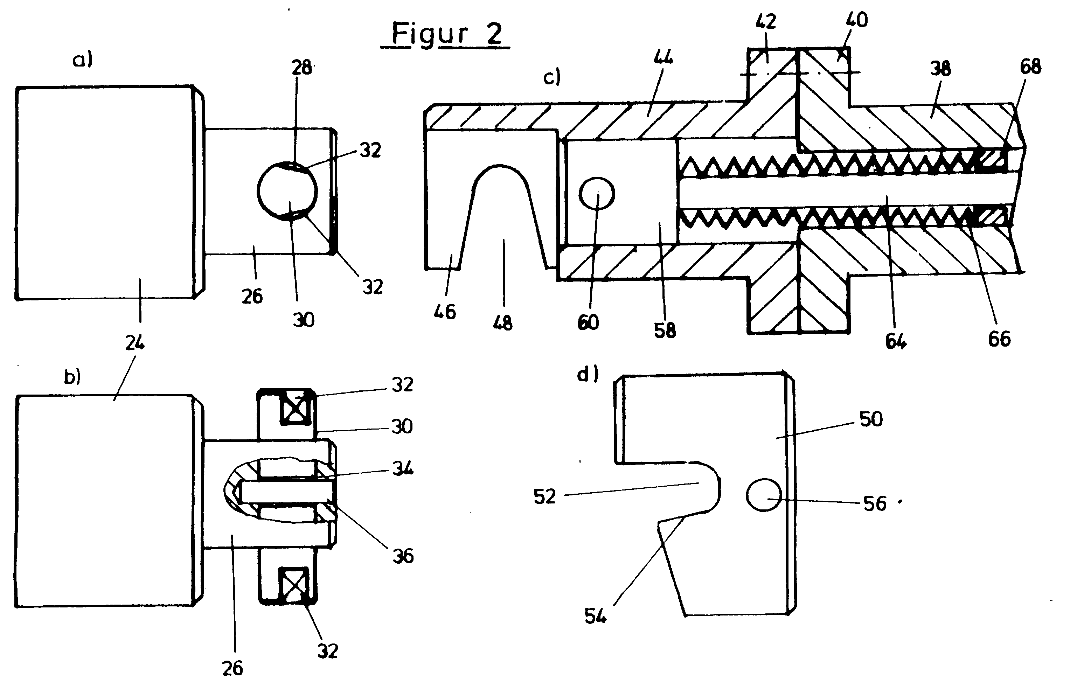

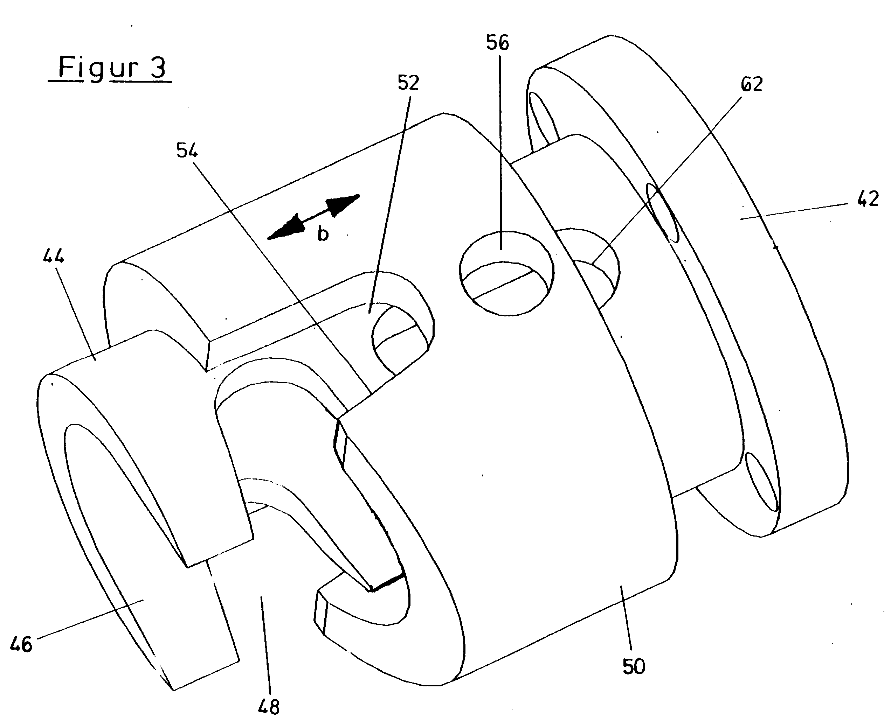

Der Aufbau der erfindungsgemäßen Kupplung 10 ergibt sich aus den Fig. 2 und 3. In den Fig. 2a und 2b ist der Teil der Kupplung dargestellt, der an der Welle 22 der Druckwalze 12 angeordnet ist. Dieser besteht aus einem Adapter 24, der in einem Zapfen 26 geringeren Durchmessers ausläuft. In dem Zapfen 26 ist eine Querbohrung 28 ausgenommen, durch welche ein Bolzen 30 gesteckt ist, der beidseitig über die Querbohrung hinausragt, wie dies in Fig. 2b gezeigt ist. An seinen jeweiligen Enden weist der Bolzen 30 jeweils auf gegenüberliegenden Seiten Schrägflächen 32 auf, die in Achsrichtung des Zapfens 26 angeschrägt sind, wie sich das beispielsweise aus der Fig. 2a ergibt. Im Bolzen 30 ist ebenfalls eine Durchgangsbohrung 34 vorgesehen, durch die ein Stift 36 eingreift, der von der Endseite des Zapfens 26 her eingeschlagen wird, wie dies in Fig. 2b gezeigt ist. Die Bohrung 34 im Bolzen 30 weist einen geringfügig größeren Durchmesser als der Stift 36 auf, so daß der Bolzen 30 insgesamt gegenüber dem Zapfen geringfügig verdrehbar ist.

Der Aufbau des Teils der Kupplung 10, der an der Antriebswelle 33 ausgebildet ist, ergibt sich aus den Fig. 2c und 2d. Mit einem endseitigen Flansch 40 der Antriebswelle 38 ist ein Flansch 42 einer Hülse 44 verbunden. Die Hülse 44 weist endseitig ein Gabelstück 46 mit einem Zentrierausschnitt 48 auf. Der Zentrierausschnitt 48 verläuft senkrecht zu der Mittelachse der Hülse 44 bzw. der Antriebswelle 38. Auf der Hülse 44 ist verschiebbar ein Schiebering 50 gelagert, der in Fig. 2d getrennt für sich und in Fig. 3 in aufgeschobener Stellung gezeigt ist. Der Schiebering weist ebenfalls einen Ausschnitt 52 mit einer Anlagefläche 54 auf, wobei der Ausschnitt 52 im wesentlichen senkrecht zu dem Ausschnitt 48 ausgerichtet ist. Im Schiebering 50 ist zusätzlich eine Durchgangsbohrung 56 angeordnet.

Wie dem Schnitt in Fig. 2c zu entnehmen ist, läuft in der Hülse 44 verschieblich ein Kolben 58, in welchem ebenfalls eine Durchgangsbohrung 60 ausgenommen ist. Durch die Durchgangsbohrung 60 verläuft ein hier nicht näher dargestellter Bolzen, der auch durch die Durchgangsbohrungen 56 des Schieberinges 50, sowie durch ein Langloch 62 innerhalb der Hülse 44 (vgl. Fig.3) verläuft. Durch diesen hier nicht näher dargestellten Bolzen ist also der Schiebering 50 mit dem innerhalb der Hülse verschieblich gelagerten Bolzen 58 verbunden. Über das Langloch 62 werden in Verbindung mit dem hier nicht näher dargestellten Bolzen Endstellungen für den Kolben 58 sowie für den Schiebering 50 definiert. Der Schiebering 50 läßt sich zusammen mit dem Kolben 58 in Doppelpfeilrichtung b(vgl. Fig. 3) verschieben. Dabei ist die eine Endstellung, die durch Anlage des nicht dargestellten Bolzens an der in Fig. 3 linken Seite des Langlochs 62 erfolgt, die geschlossene Stellung des Schieberings und der Kupplung, in welcher die Anlagefläche 54 sich an einer der Schrägflächen 32 des Bolzens 30 anlegt, wie dies in der Fig. 1 gezeigt ist. Die gegenüberliegende Anlagefläche des Langlochs 62 legt die Öffnungsstellung des Schieberings 50 fest.

In der hier dargestellten Ausführungsform ist an dem innerhalb der hülse 44 verlaufenden Kolben 58 eine Zugstange 64 angesetzt, die zunächst durch die Hülse 44 und dann durch die hohl ausgeführte Antriebswelle 38 verläuft, und wie in Fig. 1 dargestellt, seitlich herausgeführt ist. Diese Zugstange 64 ist mit ihrem seitlich herausgeführten freien Ende mit einer hier nicht näher dargestellten Kolben-Zylinder-Einheit verbunden. Wie in Fig. 2c gezeigt, verläuft prallel zur Zugstange 64 eine Druckfeder 66, die sich einerseits an einer Seite des Kolbens 58 und andererseits an Anschlägen 68, die innerhalb der Antriebswelle 38 vorgesehen sind, abstützt. Damit drückt die Druckfeder 66 den Kolben 58 und damit den Schiebering 50 in die Schließstellung, wie sie in Fig. 1 dargestellt ist. Über die nicht dargestellte Kolben-Zylinder-Einheit kann in Pfeilrichtung a gemäß Fig. 1 der Kolben 58 und damit der Schiebering 50 entgegen der Kraft der Druckfeder 66 verschoben werden. Hierdurch ist also ein einfacher automatischer Schließmechanismus geschaffen.

## Patentansprüche

1. Wellenkupplung (10) zum Ankuppeln eines Wellenzapfens (26) einer Druckmaschine (12) an einer Antriebswelle (38) mit formschlüssig ineinandergreifenden Kupplungsteilen, die mit den miteinander zu kuppelnden Wellen (12, 38) verbunden sind, wobei über den Umfang eines Zapfens (26) an dem einen Wellenende (22) ein Bolzen (30) herausragt, der in einem in einer Hülse (44), die am anderen Wellenende (38) vorgesehen ist, angeordneten Zentrierausschnitt (48) einschiebbar und dort durch eine in einem über die Hülse (44) schiebbaren Schiebering (50) vorgesehenen Anlagefläche (54) festlegbar ist, wobei der Bolzen (30) an zwei Seiten über den Zapfen (26) hinausragt,
**dadurch gekennzeichnet,**
daß der Zentrierausschnitt (48) senkrecht zur Wellenachse verläuft und daß der Bolzen (30) an seinen beiden Enden jeweils umfangsseitig schräge Flächen (32) aufweist und der Bolzen (30) geringfügig gegenüber den ihn tragenden Zapfen (26) verdrehbar ist.

2. Wellenkupplung nach Anspruch 1,
**dadurch gekennzeichnet,**
daß in der Hülse (44) ein federbelasteter Kolben (58) angeordnet ist, mit dem der Schiebering (50) verbunden ist.

3. Wellenkupplung nach Anspruch 2,
**dadurch gekennzeichnet,**
daß der federbelastete Kolben (58) über eine Kolbenzugstange (64) mit einer Kolbenzylindereinheit verbunden ist, über die er gegen die Federkraft (66) verschiebbar ist.

## Claims

1. A shaft coupling (10) for coupling a shaft journal (26) of a printing press (12) to a drive shaft (38), with coupling components engaging in one another with a form fit which are connected to the shafts (12, 38) to be coupled to one another, wherein a pin (30) projects at one shaft end (22) beyond the circumference of a journal (26), which pin is insertable into a centring cutout (48) arranged in a sleeve (44) that is provided at the other shaft end (38), and which can be secured therein by a bearing surface (54) provided in a sliding ring (50) slidable over the sleeve (44), in which arrangement the pin (30) projects on two sides beyond the journal (26),
**characterized in that**
the centring cutout (4) extends perpendicularly to the shaft axis; and that the pin (30) has on both its ends in each case inclined surfaces (32) at its circumference, and that the pin (30) can be slightly rotated relative to the journal (26) carrying it.

2. A shaft coupling according to claim 1,
**characterized in that**
in the sleeve (44) there is arranged a spring-loaded piston (58) to which the sliding ring (50) is connected.

3. A shaft coupling according to claim 2,
**characterized in that**
the spring-loaded piston (58) is connected via a piston connecting rod (64) to a piston-cylinder unit by means of which it can be displaced against the spring force (66).

## Revendications

1. Accouplement d'arbres (10) pour accoupler un tourillon d'arbre (26) d'une imprimante (12) à un arbre d'entraînement (38) avec des parties d'accouplement mises en prise par concordance des formes qui sont reliées aux arbres (12, 38) à accoupler, où sur le pourtour d'un tourillon (26) à une extrémité d'arbre (22) dépasse un boulon (30) qui peut être inséré dans une découpure de centrage (48) ménagée dans une douille (44) qui est prévue à l'autre extrémité d'arbre (38) et qui peut y être fixé par une surface d'application (54) prévue dans une bague coulissante (50) pouvant être poussée sur la douille (44), le boulon (30) faisant saillie à deux côtés sur le tourillon (26),
caractérisé en ce
que la découpure de centrage (48) s'étend perpendiculairement à l'axe de l'arbre et en ce que le boulon (30) présente à ses deux extrémités respectivement des surfaces inclinées (32), côté pourtour et que le boulon (30) peut être tourné légèrement par rapport au tourillon (26) qui le porte.

2. Accouplement d'arbre selon la revendication 1,
caractérisé en ce
qu'il est disposé dans la douille (44) un piston (58) soumis à l'action d'un ressort qui est relié à la bague coulissante (50).

3. Accouplement d'arbre selon la revendication 2,
caractérisé en ce
que le piston (58) soumis à l'action d'un ressort est relié par une tige de traction de piston (64) à une unité à piston et à cylindre par laquelle il peut être déplacé contre la force de ressort (66).
